# EUROPÄISCHE PATENTANMELDUNG

(11) **EP 2 523 321 A1**
(43) Veröffentlichungstag der Anmeldung: **14.11.2012**
(21) Anmeldenummer: 11166064.3
(22) Anmeldetag: 13.05.2011
(51) Int. Cl.: H02K 41/03, H02K 1/14

(54) **Zylindrischer Linearmotor mit geblechtem Ständer**

(71) Anmelder: Siemens Aktiengesellschaft, 80333 München (DE)
(72) Erfinder: Fick, Michael, 97656, Sondernau (DE); Stäblein, Armin, 97650, Fladungen (DE); Vollmer, Rolf, 36129, Gersfeld (DE)

(57) **Zusammenfassung**

Ein zylindrischer Linearmotor soll eine höhere Dynamik erhalten. Dazu wird ein Linearmotor mit einem zylindrischen Läufer (2) und einem zylindrischen Ständer (1), der koaxial mit dem Läufer (2) angeordnet ist, vorgeschlagen. Der Ständer (1) weist eine Vielzahl an Ringspulen (10) auf, die koaxial angeordnet sind. Der Ständer (1) besitzt außerdem einen ferromagnetischen Ständerkern (11). Der Ständerkern (11) ist aus einer Vielzahl an radial bzw. sternförmig ausgerichteten Einzelblechen gebildet. Damit reduziert sich eine durch Wirbelströme erzeugte Feldverdrängung, wodurch letztlich auch eine Zeitverzögerung beim Kraftaufbau herabgesetzt wird.

## Beschreibung

Die vorliegende Erfindung betrifft einen zylindrischen Linearmotor mit einem zylindrischen Läufer und einem zylindrischen Ständer, der koaxial zum Läufer angeordnet ist. Dabei weist der Ständer eine Vielzahl an Ringspulen auf, die koaxial angeordnet sind. Außerdem weist der Ständer einen ferromagnetischen Ständerkern auf.

Linearmotoren können in zylindrischer Bauweise ausgeführt sein. Derartige Linearmotoren werden üblicherweise für lineare Bewegungen eingesetzt, deren Frequenz im einstelligen Hertzbereich liegt. Der Ständerkern ist dabei hohlzylindrisch ausgebildet und weist an seiner Innenseite in Umfangsrichtung verlaufende Nuten auf. In diese Nuten sind Ringspulen eingelegt.

Zylindrische Linearmotoren werden aber auch für Antriebsaufgaben benötigt, die eine höhere Dynamik erfordern. Beispielsweise sollen derartige Linearmotoren für eine Frequenz von 25 Hz und mehr eingesetzt werden. Bei diesem Einsatz entstehen im Ständereisen Verluste durch Wirbelströme. Durch die Wirbelströme wird zusätzlich eine Feldverdrängung erzeugt, die zu einer Zeitverzögerung beim Kraftaufbau führt.

Bisher wurden für hochdynamische Antriebsaufgaben keine zylindrischen Linearmotoren eingesetzt. Bekannte zylindrische Linearmotoren sind eher für geringe Verfahrgeschwindigkeiten ausgelegt und können mit Ständern aus massivem Eisen hergestellt werden.

Die Aufgabe der vorliegenden Erfindung besteht somit darin, einen zylindrischen Linearmotor bereitzustellen, der auch für höherdynamische Antriebsaufgaben geeignet ist.

Erfindungsgemäß wird diese Aufgabe gelöst durch einen zylindrischen Linearmotor mit
- einem zylindrischen Läufer und
- einem zylindrischen Ständer, der koaxial mit dem Läufer angeordnet ist, wobei
- der Ständer eine Vielzahl an Ringspulen aufweist, die koaxial angeordnet sind,
- der Ständer einen ferromagnetischen Ständerkern aufweist, und
- der Ständerkern eine Vielzahl an radial ausgerichteten Einzelblechen besitzt.

In vorteilhafter Weise wird durch die Blechung des Ständerkerns erreicht, dass die Wirbelströme im Ständerkern bzw. Ständereisen reduziert und damit auch die Verluste minimiert werden. Außerdem kommt es so umso weniger zu einer Feldverdrängung, sodass ein rascherer Kraftaufbau möglich ist.

Vorzugsweise besitzt jedes der Einzelbleche eine kammartige Struktur. Werden die Einzelbleche dann in Umfangsrichtung aneinander angeordnet, so stoßen die Einzelbleche mit den Zahnköpfen aneinander und sind radial ausgerichtet. Damit ergibt sich eine hohlzylindrische Blechanordnung, die im Wesentlichen den Ständerkern darstellt, und die an der Innenseite in Umfangsrichtung verlaufende Nuten aufweist, in welche die Ringspulen eingelegt werden können.

Vorteilhafterweise ist die Anzahl der Ringspulen des Ständers ein Vielfaches von drei. Damit kann der zylindrische Linearmotor für ein dreiphasiges System genutzt werden.

In einer speziellen Ausführungsform kann der Ständerkern in Umfangsrichtung verlaufende Zähne aufweisen, an deren Zahnköpfen jeweils ein Zahnkopfring angeordnet ist. Derartige Zahnkopfringe dienen nicht nur zum Sammeln des magnetischen Flusses, sondern auch zur Fixierung der Einzelbleche der Blechanordnung.

Darüber hinaus können die Einzelbleche des Ständerkerns eine Blechanordnung bilden, die in tangentialer Richtung bzw. Umfangsrichtung eine oder mehrere Unterbrechungen aufweist, in die jeweils ein Ständerkammelement eingefügt ist. In diesem Ständerkammelement können die Anschlüsse der Wicklungen nach außen geführt werden.

Darüber hinaus kann das Ständerkammelement einen axial verlaufenden Kanal aufweisen, in dem eine Schaltung der Ringspulen angeordnet ist. Somit kann das Kammelement auch dazu genutzt werden, Schaltelemente für die Schaltung bzw. Verbindung der Wicklungen unterzubringen und zu fixieren.

Darüber hinaus ist es vorteilhaft, wenn das Ständerkammelement ein elektrisch isolierendes Kunststoffteil, ein elektrisch isoliertes Gussteil oder ein elektrisch isoliertes Sinterteil aufweist. Derartige Materialien können gewährleisten, dass die Schaltung der Wicklungen gefahrlos am Ständer untergebracht werden kann.

Vorzugsweise sind die Einzelbleche des Ständerkerns an jedem axialen Ende des Ständers durch jeweils einen Fixierring fixiert. Damit werden die Einzelbleche radial fest an dem Ständerkern gehalten bzw. vorfixiert.

Der Ständerkern kann von einem Gehäuse oder einem Kühlmantel umgeben sein. Damit ist es möglich, den Ständer zu schützen oder entsprechend zu kühlen.

In einer besonders bevorzugten Ausführungsform ist der Ständerkern mit einem Harz ausgegossen. Dadurch werden die Lücken zwischen den Einzelblechen, die ja sternförmig angeordnet sind, geschlossen, sodass der Ständerkern stabilisiert wird.

Die vorliegende Erfindung wird nun anhand der beigefügten Zeichnungen erläutert, in denen zeigen:
- FIG 1: einen Querschnitt durch einen Teil eines zylindri-schen Linearmotors gemäß der vorliegenden Erfin-dung;
- FIG 2: ein Ständerblech des zylindrischen Linearmotors von FIG 1;
- FIG 3: einen vergrößerten Ausschnitt von FIG 1;
- FIG 4: eine Schrägansicht eines Ständers eines erfindungs-gemäßen zylindrischen Linearmotors;
- FIG 5: ein Ständerkammelement;
- FIG 6: eine Stirnseitenansicht eines Teils des Ständers von FIG 4 im Bereich des Ständerkammelements und
- FIG 7: einen Querschnitt durch einen Ständer eines erfin-dungsgemäßen zylindrischen Linearmotors.

Die nachfolgend näher geschilderten Ausführungsbeispiele stellen bevorzugte Ausführungsformen der vorliegenden Erfindung dar.

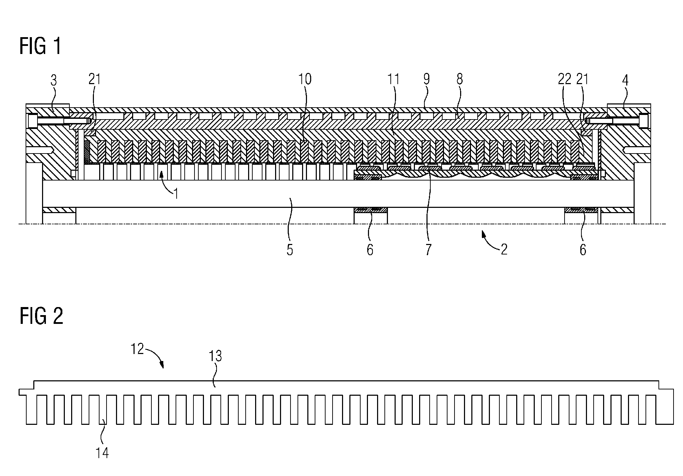

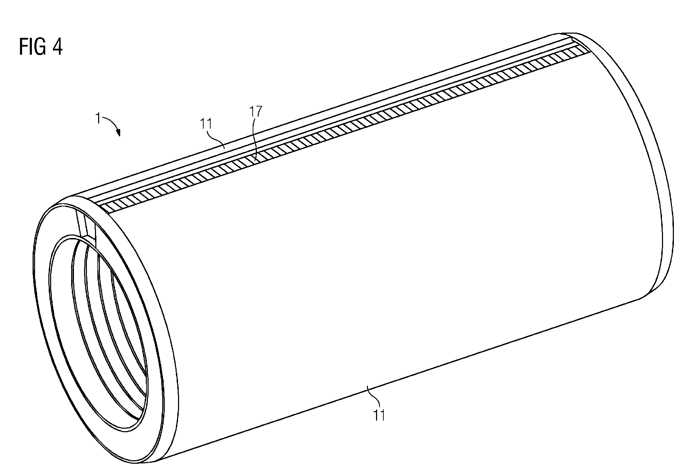

FIG 1 stellt einen Querschnitt durch einen Teil eines zylindrischen Linearmotors dar, dessen Ständer 1 ebenfalls zylinderförmig ausgestaltet ist und in FIG 4 perspektivisch wiedergegeben ist. In dem zylindrischen Ständer 1 befindet sich koaxial ein ebenfalls zylindrischer Läufer 2. Lagerschilde 3, 4 befinden sich an den Stirnseiten des Ständers 1. In den Lagerschilden 3, 4 ist parallel zu der Achse des zylindrischen Linearmotors eine Führungsstange 5 für den Läufer 2 befestigt. Eine oder mehrere weitere derartige Führungsstangen 5 sind in den Lagerschilden 3, 4 zur Führung des Läufers 2 fixiert. Mit Führungsbuchsen 6 ist der Läufer 2 linear auf der bzw. den Führungsstangen 5 gelagert. An seiner Außenfläche befinden sich in axialer Richtung und in Umfangsrichtung verteilt mehrere Permanentmagnete 7.

Der Ständer 1 ist außen von einem Kühlmantel 8 umgeben. Dieser Kühlmantel 8 bildet zusammen mit einem Gehäuse 9, das wiederum den gerippten Kühlmantel 8 umgibt, zahlreiche Kühlkanäle, in denen beispielsweise Wasser zur Kühlung des Linearmotors fließt. Die Lagerschilde 3, 4 sind an dem Kühlmantel 8 bzw. dem Gehäuse 9 befestigt, beispielsweise angeschraubt.

Der Ständer 1 besitzt zahlreiche Ringspulen 10, die jeweils in Umfangsrichtung des zylindrischen Ständers 1 verlaufen. Sie sind in entsprechende Nuten des Ständerkerns 11 eingelegt. Die Nuten verlaufen ebenfalls in Umfangsrichtung. Der Ständerkern ist üblicherweise aus einem ferromagnetischen Material gebildet und konzentriert den magnetischen Fluss der Ringspulen 10.

Erfindungsgemäß ist der Ständerkern 11 geblecht. Er weist zahlreiche Einzelbleche 12 auf, die gemäß FIG 2 eine kammförmige Struktur besitzen. Jedes der Einzelbleche erstreckt sich in axialer Richtung des zylindrischen Linearmotors. Ein Einzelblech besitzt die axiale Länge des Ständerkerns, oder es sind mehrere Einzelbleche hintereinander angeordnet. In Umfangsrichtung des zylindrischen Ständers 1 sind die Einzelbleche 12 sternförmig bzw. radial angeordnet. Damit ergibt sich eine zylinderförmige Blechanordnung bzw. ein zylinderförmiges Blechpaket.

Jedes Einzelblech 12 besitzt ein axial verlaufendes Joch 13, von dem senkrecht zahlreiche Zähne 14 abstehen. Im montierten Zustand weisen die Zähne 14 radial nach innen und bilden die Wände der Nuten für die Ringspulen 10.

Dadurch dass der Ständerkern 11 geblecht ausgeführt ist, können sich in ihm auch bei höheren Verfahrgeschwindigkeiten nur in einem sehr geringen Maße Wirbelströme ausbilden. Die elektrischen Verluste sind entsprechend reduziert. Außerdem erfährt der kraftbildende Feldaufbau durch die Blechung des Ständers eine geringere Verzögerung. Damit kann eine erhöhte Dynamik des zylindrischen Linearmotors erreicht werden.

Der Ständer 1 weist hier eine Anzahl von 3 x i Ringspulen auf, wobei i eine natürliche Zahl darstellt (i = 1, 2, 3, ...). Damit kann der Ständer für ein dreiphasiges Wicklungssystem genutzt werden. Die Spulen des Wicklungssystems sind durch den Blechkamm, d. h. den Ständerkern mit den Nuten, beabstandet und axial positioniert. Die Anzahl der Zähne des Blechkamms orientiert sich an der Anzahl der Spulen. Ein Einzelblech 12 besteht dementsprechend aus mindestens einem Zahnbereich mit den Zähnen 14 und einem Jochbereich 13.

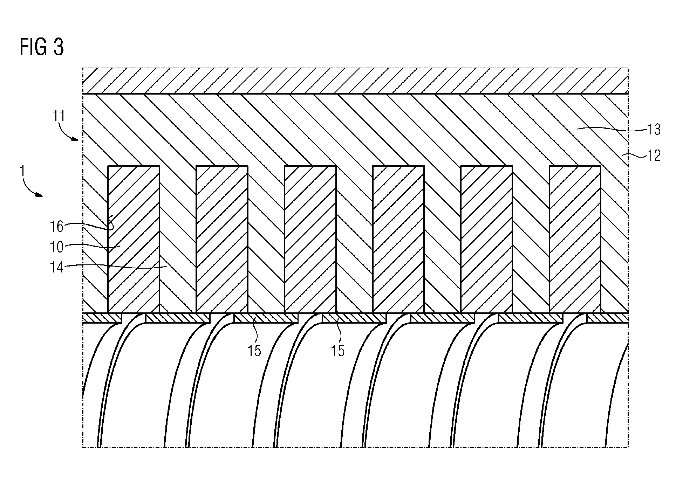

In FIG 3 ist ein vergrößerter Ausschnitt des Ständers 1 von FIG 1 wiedergegeben. Diese Ansicht zeigt an der Schnittfläche ein Einzelblech 12 mit seinem Joch 13 und den Zähnen 14. Zusammen mit vielen Einzelblechen, die in Umfangsrichtung angeordnet sind, ergibt sich der spezifisch strukturierte Ständerkern 11. Zwischen den Zähnen 14 befinden sich die Ringspulen 10. An den Zahnköpfen, d.h. an der dem Läufer zugewandten Seite der jeweiligen Zahnköpfe befinden sich Zahnkopfringe 15. Jedem Zahn 14 ist ein Zahnkopfring 15 zugeordnet. Die Zahnkopfringe 15 verlaufen also auch in Umfangsrichtung an der Innenseite des Ständers. Sie haben mehrere Funktionen. Zum einen sammeln sie den Fluss im Bereich der Zahnköpfe. Zum anderen fixieren sie die Ringspulen 10 in ihren Nuten 16. Dazu besitzen Sie in axialer Richtung eine etwas größere Ausdehnung als die Zähne 14. Dadurch verschließen die Zahnkopfringe 15 die Nuten 16 teilweise. Eine weitere wesentliche Funktion der Zahnkopfringe besteht darin, dass sie die sternförmig angeordneten Bleche 12 innen stützen bzw. fixieren.

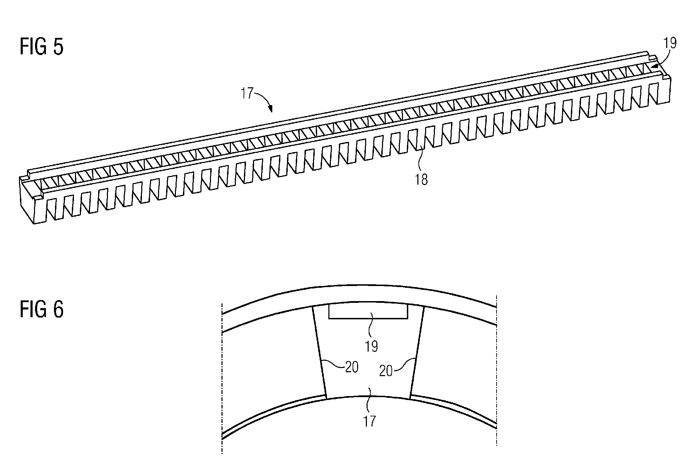

FIG 4 zeigt einen zylindrischen Ständer 1 eines erfindungsgemäßen Linearmotors. Der Ständerkern 11 ist durch die geschilderte Blechanordnung mit den sternförmig angeordneten Einzelblechen gebildet. Die Blechanordnung bzw. der Ständerkern 11 ist in Umfangsrichtung durch ein Ständerkammelement 17 unterbrochen. Dieses Ständerkammelement 17 ist in FIG 5 einzeln dargestellt. Es besitzt (bezogen auf den in dem zylindrischen Ständerkern 11 eingesetzten Zustand) eine radiale Höhe, die derjenigen des Ständerkerns 11 entspricht. Die axiale Länge des Ständerkammelements entspricht hier derjenigen eines Einzelblechs 12. Die Länge des Kammelements kann aber auch der Länge mehrerer Einzelbleche entsprechen, oder umgekehrt. Die Struktur des Ständerkammelements 17 an der Innenseite (wieder bezogen auf den in den zylindrischen Ständerkern 11 eingesetzten Zustand) entspricht im Wesentlichen derjenigen eines gleichgroßen Sektors des Ständerkerns 11 bzw. der Blechanordnung. Dies bedeutet, dass das Ständerkammelement 17 geometrisch gleich geformte Zähne 18 besitzt wie die Blechanordnung. Dementsprechend sind die Nuten der Blechanordnung durch das eingesetzte Ständerkammelement 17 nicht unterbrochen.

An seiner Außenseite besitzt das Ständerkammelement 17 einen Kanal 19, der unter den Außenmantel des zylindrischen Ständers 1 reicht. In diesen Kanal 19 können die Verbindungen zwischen den einzelnen Spulen hergestellt werden. Auf diese Weise können die Ringspulen in axialer Richtung miteinander verbunden bzw. geschaltet werden, ohne dass die radiale Dimension des Ständers 1 vergrößert werden müsste.

Am Umfang des Ständers 1 kann ein derartiges Ständerkammelement 17 oder mehrere derartige Ständerkammelemente angeordnet sein, die den Ständerkern bzw. die Blechanordnung in Umfangsrichtung einfach oder mehrfach unterbrechen. Das bzw. die Ständerkammelemente 17 können nicht nur für die Schaltung der Ringspulen 10, sondern generell für die Ausleitung der Windungsanschlüsse genutzt werden.

In der Stirnseitenansicht von FIG 6 ist zu erkennen, dass ein Ständerkammelement 17 vorzugsweise ringsektorförmige Gestalt besitzt. Die Seitenflächen 20 sind entsprechend radial ausgerichtet. Sie dienen damit gleichzeitig zur Anlage der benachbarten Bleche.

Als Material für die Ständerkammelemente 17 wird bevorzugt isolierender Kunststoff verwendet. Ständerkammelemente 17 können aber auch Guss- oder Sinterteile sein. In diesem Fall besitzen sie dann an der Oberfläche eine elektrische Isolierschicht.

Die Verbindungen zwischen den einzelnen Spulen werden bevorzugt durch eine vorkonfektionierte Schaltleiste erzeugt, die im Schaltkanal 19 positioniert wird. Die Schaltung der Ringspulen wird so ausgelegt, dass sich möglichst geringe Rastkräfte ergeben. Die Anzahl der Spulen wird dementsprechend abgestimmt. Daraus ergibt sich eine Urwicklung, und der Ständer besitzt die Länge eines ganzzahligen Vielfachen der Urwicklung. Im vorliegenden Beispiel besitzt die Urwicklung die Länge des Läufers 2, und der Ständer 1 ist doppelt so lang wie der Läufer. Speziell besitzt der Ständer hier 36 Ringspulen.

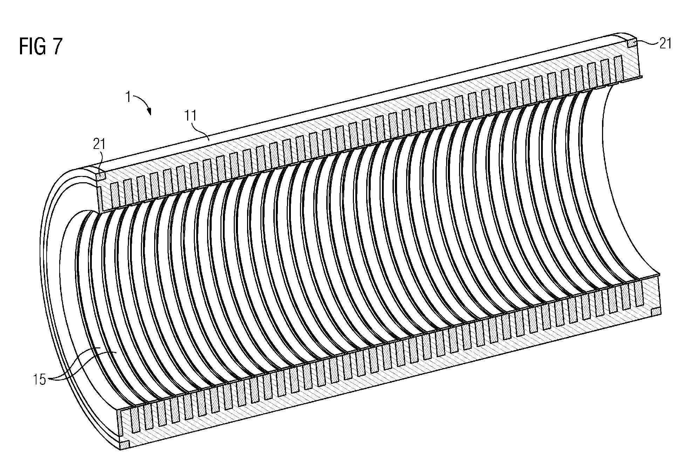

Bei der Fertigung und im späteren Betrieb ist es wichtig, dass die Einzelbleche der Blechanordnung, die ja sternförmig angeordnet sind, ausreichend fixiert werden. Radial nach innen sind die Einzelbleche gemäß FIG 7 durch die Zahnkopfringe 15 fixiert. Radial nach außen werden die Einzelbleche des Ständerkerns durch Fixierringe 21 gehalten. Die Fixierringe 21 befinden sich an den stirnseitigen Enden des Ständers 1. Dort drücken Sie auf jeweilige Schultern 22 der Einzelbleche 12 (vergleiche auch FIG 1). Im vorliegenden Beispiel sind die Fixierringe 21 oberflächenbündig mit der restlichen Blechanordnung. Die Fixierringe 21 dienen somit zur radialen und axialen Vorfixierung der Einzelbleche.

Als äußerer Rahmen des Ständers 1 kann, wie in FIG 1 angedeutet ist, ein Gehäuse 9 und/oder ein Kühlmantel 8 dienen. Sie umgeben die sternförmige Blechanordnung am gesamten Umfang. Zur besseren thermischen Anbindung kann der Ständer (insbesondere der Zwischenraum zwischen den sternförmig angeordneten Einzelblechen) mit Harz ausgegossen werden.

Die innenliegenden Zahnkopfringe haben nicht nur die Funktion einer radialen Stütze, sondern auch die Funktion eines magnetischen Flusssammlers, wie oben bereits erwähnt wurde. Damit lässt sich eine höhere Kraft erzeugen, und somit wird eine höhere Dynamik ermöglicht. Ebenso bewirkt die optionale Wasserkühlung und der Verguss eine höhere zulässige Stromdichte und somit ebenfalls eine höhere Kraft und Dynamik.

## Patentansprüche

1. Zylindrischer Linearmotor mit
- einem zylindrischen Läufer (2) und
- einem zylindrischen Ständer (1), der koaxial mit dem Läufer (2) angeordnet ist, wobei
- der Ständer (1) eine Vielzahl an Ringspulen (10) aufweist, die koaxial angeordnet sind, und wobei
- der Ständer (1) einen ferromagnetischen Ständerkern (11) aufweist,
**dadurch gekennzeichnet, dass**
- der Ständerkern (11) eine Vielzahl an radial ausgerichteten Einzelblechen (12) besitzt.

2. Zylindrischer Linearmotor nach Anspruch 1, wobei jedes der Einzelbleche (12) eine kammartige Struktur besitzt.

3. Zylindrischer Linearmotor nach Anspruch 1 oder 2, wobei die Anzahl der Ringspulen (10) des Ständers (1) ein Vielfaches von drei ist.

4. Zylindrischer Linearmotor nach einem der vorhergehenden Ansprüche, wobei der Ständerkern (11) in Umfangsrichtung verlaufende Zähne aufweist, an deren Zahnköpfe jeweils ein Zahnkopfring (15) angeordnet ist.

5. Zylindrischer Linearmotor nach einem der vorhergehenden Ansprüche, wobei die Einzelbleche (12) des Ständerkerns (11) eine Blechanordnung bilden, die in Umfangsrichtung eine oder mehrere Unterbrechungen aufweist, in die jeweils ein Ständerkammelement (17) eingefügt ist.

6. Zylindrischer Linearmotor nach Anspruch 5, wobei das Ständerkammelement (17) einen axial verlaufenden Kanal (19) aufweist, in dem eine Schaltung der Ringspulen (10) angeordnet ist.

7. Zylindrischer Linearmotor nach Anspruch 5 oder 6, wobei das Ständerkammelement (17) ein elektrisch isolierendes Kunststoffteil, ein elektrisch isoliertes Gussteil oder ein elektrisch isoliertes Sinterteil aufweist.

8. Zylindrischer Linearmotor nach einem der vorhergehenden Ansprüche, wobei die Einzelbleche (12) des Ständerkerns (11) an jedem axialen Ende des Ständers durch jeweils einen Fixierring (21) fixiert sind.

9. Zylindrischer Linearmotor nach einem der vorhergehenden Ansprüche, wobei der Ständerkern (11) von einem Gehäuse (9) und/oder einem Kühlmantel (8) umgeben ist.

10. Zylindrischer Linearmotor nach einem der vorhergehenden Ansprüche, wobei der Ständerkern (11) mit einem Harz ausgegossen ist.

## Geänderte Patentansprüche

### Geänderte Patentansprüche gemäss Regel 137(2) EPÜ.

**1.** Zylindrischer Linearmotor mit
- einem zylindrischen Läufer (2) und
- einem zylindrischen Ständer (1), der koaxial mit dem Läufer (2) angeordnet ist, wobei
- der Ständer (1) eine Vielzahl an Ringspulen (10) aufweist, die koaxial angeordnet sind,
- der Ständer (1) einen Ständerkern (11) aufweist,
- der Ständerkern (11) eine Vielzahl an radial ausgerichteten Einzelblechen (12) besitzt, und
- der der Ständerkern (11) in Umfangsrichtung verlaufende Zähne aufweist,
**dadurch gekennzeichnet, dass**
- der Ständerkern (11) aus einem ferromagnetischen Material gebildet ist und
- an Zahnköpfe der Zähne jeweils ein Zahnkopfring (15) angeordnet ist.

**2.** Zylindrischer Linearmotor nach Anspruch 1, wobei jedes der Einzelbleche (12) eine kammartige Struktur besitzt.

**3.** Zylindrischer Linearmotor nach Anspruch 1 oder 2, wobei die Anzahl der Ringspulen (10) des Ständers (1) ein Vielfaches von drei ist.

**4.** Zylindrischer Linearmotor nach einem der vorhergehenden Ansprüche, wobei die Einzelbleche (12) des Ständerkerns (11) eine Blechanordnung bilden, die in Umfangsrichtung eine oder mehrere Unterbrechungen aufweist, in die jeweils ein Ständerkammelement (17) eingefügt ist.

**5.** Zylindrischer Linearmotor nach Anspruch 4, wobei das Ständerkammelement (17) einen axial verlaufenden Kanal (19) aufweist, in dem eine Schaltung der Ringspulen (10) angeordnet ist.

**6.** Zylindrischer Linearmotor nach Anspruch 4 oder 5, wobei das Ständerkammelement (17) ein elektrisch isolierendes Kunststoffteil, ein elektrisch isoliertes Gussteil oder ein elektrisch isoliertes Sinterteil aufweist.

**7.** Zylindrischer Linearmotor nach einem der vorhergehenden Ansprüche, wobei die Einzelbleche (12) des Ständerkerns (11) an jedem axialen Ende des Ständers durch jeweils einen Fixierring (21) fixiert sind.

**8.** Zylindrischer Linearmotor nach einem der vorhergehenden Ansprüche, wobei der Ständerkern (11) von einem Gehäuse (9) und/oder einem Kühlmantel (8) umgeben ist.

**9.** Zylindrischer Linearmotor nach einem der vorhergehenden Ansprüche, wobei der Ständerkern (11) mit einem Harz ausgegossen ist.
